# FASCICULE DE BREVET EUROPEEN

(11) **EP 1 948 508 B1**
(45) Date de publication et mention de la délivrance du brevet: **02.06.2010**
(21) Numéro de dépôt: 06830995.4
(22) Date de dépôt: 24.10.2006
(51) Int. Cl.: B64D 11/00

(54) **RANGEMENT POUR BAGAGES DESTINE NOTAMMENT A UNE CABINE D'AERONEF**
INSBESONDERE FÜR EINE FLUGZEUGKABINE KONSTRUIERTES GEPÄCKFACH
LUGGAGE CABINET WHICH IS INTENDED, IN PARTICULAR, FOR AN AIRCRAFT CABIN

(30) Priorité: 28.10.2005 FR 0511027
(43) Date de publication de la demande: 30.07.2008
(73) Titulaire: Airbus, 31707 Blagnac (FR)
(72) Inventeur: BOCK, Thomas-Mathias, F-31330 Grenade-sur-Garonne (FR)
(74) Mandataire: Hartmann, Jean-Luc
(86) Numéro de dépôt international: PCT/FR2006/002379
(87) Numéro de publication internationale: WO 2007/048915

(56) Documents cités:
- AT-B- 410 536
- US-A1- 2001 011 692
- US-B1- 6 241 186

## Description

La présente invention concerne un rangement à bagages destiné notamment à une cabine d'aéronef et plus particulièrement un casier à bagages.

Le domaine de la présente invention est le transport de passagers dans un aéronef. Au cours d'un voyage, des bagages des voyageurs sont disposés dans des soutes de l'aéronef tandis que des bagages plus légers peuvent accompagner les voyageurs dans la cabine de l'aéronef. Dans cette cabine, des rangements sont prévus pour ces bagages, appelés également bagages à main. Le plus souvent, ces rangements sont disposés en partie haute de la cabine de l'aéronef, sous le plafond de cette cabine et au-dessus des sièges destinés à accueillir les passagers.

Il existe deux grands types de rangement pour bagages tels que décrits précédemment. Il y a d'une part des coffres à bagages et d'autre part des casiers à bagages. Un coffre à bagages est un compartiment fixe par rapport à la cabine de l'aéronef et une porte, généralement pivotante, permet l'ouverture et la fermeture de l'accès au compartiment à bagages. Un casier à bagages présente lui aussi un compartiment destiné à recevoir les bagages et comportant un accès. Ce compartiment est ici un compartiment mobile entre une première position sortie dans laquelle l'accès au compartiment est ouvert, permettant l'introduction et le retrait de bagages, et une position escamotée à l'intérieur du plafond de la cabine de l'aéronef dans laquelle l'accès au compartiment est fermé.

La tendance actuelle, dictée par les compagnies aériennes, est d'augmenter le volume de rangement pour les bagages à main à l'intérieur des cabines d'aéronef. Toutefois, le volume à l'intérieur d'une cabine d'aéronef est limité. Il convient donc de profiter au mieux de l'espace disponible à l'intérieur d'une cabine donnée. En outre, en ce qui concerne les casiers et les coffres à bagages, leurs dimensions sont limitées dans la mesure où les normes prévoient que ces rangements, en position ouverte ou fermée, ne doivent pas gêner la circulation des passagers dans les couloirs de la cabine d'aéronef.

La présente invention a alors pour but de fournir un compartiment à bagages qui, pour un encombrement extérieur donné, permet un volume de rangement plus important pour les bagages que les rangements connus de l'art antérieur.

A cet effet, elle propose un rangement pour bagages, destiné notamment à une cabine d'aéronef, comportant un compartiment présentant une face inférieure et une face supérieure, une face ouverte permettant l'accès au compartiment pour le dépôt et le retrait de bagages ou similaires à l'intérieur de celui-ci et un fond, opposé à la face ouverte du compartiment. Un tel rangement est décrit dans US 6,241,186 B1.

Selon la présente invention, la face inférieure du compartiment est sensiblement plane du côté de la face ouverte, la face inférieure du compartiment se relève à proximité du fond, et une rainure, dont la concavité est orientée vers la face supérieure du compartiment, est réalisée dans la zone de jonction entre la partie relevée de la face inférieure et le fond.

Avec un tel rangement, une valise à roulettes peut être logée dans le compartiment à bagages dans le sens de la longueur et non pas à plat mais en diagonale. Les roulettes de la valise sont introduites en premier lorsque le compartiment est ouvert. Elles viennent alors rouler sur la partie plane de la face inférieure et la partie relevée de cette face vient les guider ensuite jusque dans la rainure qui est destinée à les recevoir. La valise est alors maintenue dans le compartiment du rangement à bagages grâce à la coopération des roulettes de la valise avec la rainure.

Pour mieux maintenir une valise disposée dans le rangement à bagages, ou pour retenir une éventuelle valise ne comportant pas de roulettes, le bord libre de la face inférieure du compartiment se trouvant du côté de la face ouverte d'accès au compartiment présente avantageusement un rebord faisant saillie de la face inférieure du compartiment en direction de la face supérieure de celui-ci. Ce rebord peut être formé par exemple par une pièce profilée. De préférence, pour éviter de blesser un usager ou d'abîmer un bagage, ce rebord, profilé ou non, est arrondi.

Pour faciliter la mise en place dans le compartiment d'une valise, la partie relevée de la face inférieure du compartiment se relève progressivement de la partie plane jusqu'à la rainure.

Dans une variante de réalisation, la partie relevée de la face inférieure du compartiment représente entre 15 et 40 % de la face inférieure du compartiment. Ainsi, le volume occupé par la partie relevée n'est pas trop important et cette partie relevée peut présenter une pente qui n'est pas trop importante de manière à faciliter le logement des bagages.

A titre d'exemple illustratif, il est indiqué ici que la rainure se trouve par exemple entre 5 et 30 cm au-dessus du niveau de la partie plane de la face inférieure du compartiment.

Dans une forme de réalisation préférée du rangement pour bagages selon l'invention, ce casier est mobile entre une position inférieure ouverte et une position relevée escamotée à l'intérieur d'un plafond de cabine d'aéronef. Dans une variante de réalisation de ce rangement (qui est ici un casier à bagages), la partie plane de la face inférieure du compartiment, dans la position ouverte du compartiment est sensiblement horizontale, c'est-à-dire sensiblement parallèle au plancher de la cabine d'aéronef. Ces caractéristiques permettent de limiter la hauteur du seuil de l'entrée du compartiment recevant les bagages et facilite donc l'utilisation de ce casier à bagages.

La présente invention concerne également une cabine d'aéronef et un aéronef, **caractérisés en ce qu**'ils comportent un rangement à bagages tel que décrit ci-dessus, et plus particulièrement un tel casier à bagages.

Des détails et avantages de la présente invention ressortiront mieux de la description qui suit, faite en référence aux dessins schématiques annexés sur lesquels :
La figure 1 est une vue schématique d'un casier selon l'invention en position fermée, tandis que
La figure 2 montre ce casier schématiquement en position ouverte.

Le casier à bagages 2 représenté aux dessins est un casier monté pivotant autour d'un axe de pivotement 4. Il s'agit ici d'un casier à bagages 2 monté dans une cabine d'aéronef. Ce casier est monté dans la partie supérieure de cette cabine, au-dessus de sièges de passagers non représentés. L'axe de pivotement 4 est un axe longitudinal par rapport à la cabine de l'aéronef. On reconnaît sur les dessins le plafond 6 de cette cabine.

Le casier à bagages 2 comporte une face inférieure 8, un fond 10, une face supérieure 12 et des parois latérales 14. La forme globale de ce casier est sensiblement parallélépipédique. La face opposée au fond 10 est une face entièrement ouverte.

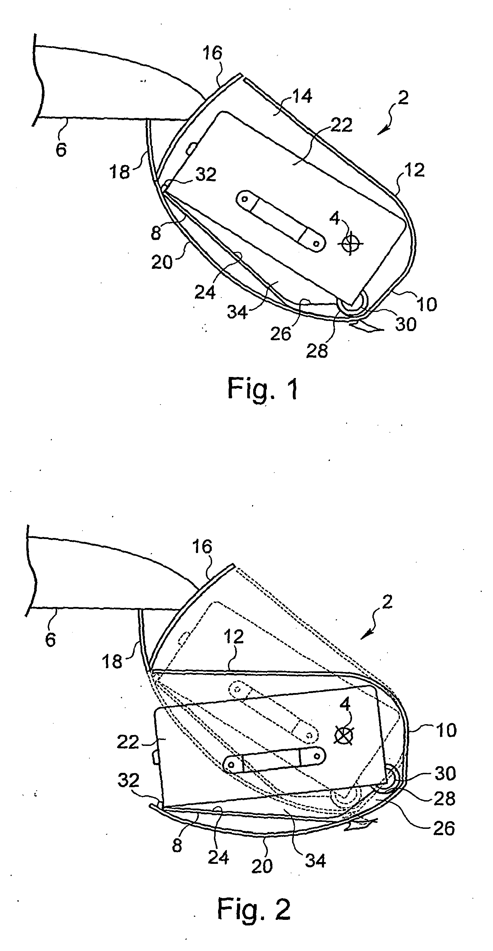

Sur la figure 1, le casier à bagages 2 est représenté dans sa position fermée. Il est alors escamoté dans le plafond 6 de la cabine d'aéronef. A l'intérieur de ce plafond, un volet fixe 16 vient fermer la face ouverte, opposée au fond 10, du casier à bagages. Ce volet fixe 16 prend par exemple, comme représenté aux dessins, la forme d'un tronçon cylindrique circulaire dont l'axe correspond à l'axe de pivotement 4.

Pour des raisons esthétiques, un carénage est prévu pour masquer le casier à bagages. En position fermée de ce dernier, le carénage cache entièrement le casier à bagages 2 de la vue des passagers se trouvant dans la cabine de l'aéronef. Ce carénage comprend un carénage fixe 18 reliant un bord du volet fixe 16 au plafond 6 et un carénage mobile 20 recouvrant notamment la face inférieure 8 de ce casier à bagages 2.

La figure 2 représente le casier à bagages dans sa position ouverte. Pour passer de la position fermée représentée sur la figure 1 à la position ouverte de la figure 2, le casier à bagages 2 pivote vers le bas autour de son axe de pivotement 4. Dans cette position, le volet fixe 16 ne recouvre plus la face ouverte du casier et cette face ouverte est entièrement dégagée. Un passager peut alors placer à l'intérieur du casier une valise 22 ou l'en retirer.

La face inférieure 8 du casier à bagages 2 présente une partie plane du côté de la face ouverte du casier. Cette partie plane 24, dans la forme de réalisation représentée aux dessins, s'étend sur environ 70% de la profondeur du casier à bagages. Ensuite, en se rapprochant du fond 10 du casier à bagages 2, la face inférieure 8 présente une partie relevée 26 orientée vers la face supérieure 12. Ainsi, sur les figures ci-jointes correspondant sensiblement à une coupe transversale, la face inférieure 8 du casier à bagages 2 présente une forme coudée.

L'extrémité libre de la partie relevée 26 porte une rainure 28. Cette dernière se trouve donc à proximité immédiate du fond 10. Cette rainure 28 est de forme cylindrique circulaire. Sa concavité est orientée vers la face supérieure 12 du casier à bagages 2. Cette rainure 28 est de dimension adaptée pour recevoir une roulette 30 de valise 22. Ainsi, le rayon de courbure de la rainure 28 est par exemple de l'ordre de 3 à 10 cm.

Actuellement, une très grande majorité de valises présente des roulettes 30. La mise en place d'une valise 22 à roulettes 30 s'effectue alors de la manière suivante. Le casier à bagages 2 est disposé dans sa position ouverte représentée sur la figure 2. La valise 22 est alors présentée de telle sorte que ces roulettes 30 sont introduites en premier à l'intérieur du casier à bagages 2 et viennent rouler sur la partie plane 24 de la face inférieure 8 du casier à bagages 2.
En arrivant vers le fond 10 du casier à bagages, la partie relevée 26 de la face inférieure 8 guide les roulettes 30 vers la rainure 28. La valise 22 est alors en place dans le casier à bagages 2. Elle est retenue dans ce casier grâce à la coopération des roulettes 30 et de la rainure 28. Ce processus de chargement est tout à fait naturel pour le passager qui préfère disposer la poignée de son bagage du côté accessible du casier.

La partie plane 24 de la face inférieure 8 du casier à bagages 2 est de préférence sensiblement horizontale lorsque le casier à bagages 2 est dans sa position ouverte. On considère ici que l'aéronef est posé au sol. Dans ce cas, le sol de la cabine de l'aéronef est lui aussi sensiblement horizontal. Ainsi, par rapport à la cabine de l'aéronef, on peut considérer que la partie plane 24 de la face inférieure 8 du casier à bagages 2 est sensiblement parallèle, lorsque le casier à bagages est en position ouverte, au sol (et/ou au plafond) de la cabine de l'aéronef.

Pour mieux retenir la valise 22 à l'intérieur du casier à bagages 2, il est également prévu de munir le bord libre de la face inférieure 8 se trouvant du côté de la face ouverte du casier à bagages 2 d'un rail profilé 32 formant une légère saillie au dessus de la partie plane 24 de la face inférieure 8 du casier à bagages 2. Ce rail profilé 32 forme ainsi un obstacle pour tout objet se trouvant sur la face inférieure 8 du casier à bagages 2. Afin d'éviter d'abîmer les bagages ou autres objets trouvant leur place dans le casier à bagages 2, et surtout pour éviter toute blessure aux passagers se servant du casier à bagages 2, le rail profilé présente une forme plutôt arrondie.

Une telle forme de réalisation d'un casier à bagages permet, pour un même encombrement extérieur, de loger des bagages de taille plus importante.
Par rapport à un casier à bagages de l'état de l'art, le casier à bagages 2 décrit ci-dessus permet un gain de l'ordre de 3" (soit environ 7 à 8 cm) en encombrement transversal. Il faut rappeler ici que les casiers à bagages, dans une cabine d'aéronef, même en position ouverte, ne doivent pas faire obstacle au déplacement des passagers circulant dans les couloirs prévus à cet effet. Les casiers à bagages ne doivent donc pas faire saillie au-delà des sièges de la cabine, au-dessus des couloirs de circulation. Grâce au gain de place réalisé, il devient possible de disposer une valise 22 correspondant au format maximal accepté en général par les compagnies aériennes dans la cabine d'aéronef (appelé généralement "traveller pro") transversalement dans le casier à bagages alors que dans les casiers de l'art antérieur le rangement de telles valises devait être réalisé longitudinalement. Le gain de place est très sensible. L'espace suffisant pour accueillir quatre valises de format traveller pro dans un casier selon l'invention ne peut recevoir, avec un casier de l'art antérieur, qu'à peine deux valises du même format.

Le volume 34 se trouvant entre la face inférieure 8 du casier à bagages 2 selon l'invention et la valise 22 n'est pas un espace perdu, bien au contraire. Un passager pourra mettre à profit ce volume pour y ranger en toute sécurité divers objets de petite taille et notamment une veste ou similaire. Ce volume 34 étant bien délimité, les objets qui y sont placés y sont également retenus.

La présente invention ne se limite pas à la forme de réalisation préférée décrite ci-dessus à titre d'exemple non limitatif. Elle concerne également toutes les variantes à la portée de l'homme du métier, dans le cadre des revendications ci-après.

Ainsi par exemple, le rangement décrit ci-dessus est représenté au dessin est un casier à bagages présentant un compartiment destiné à recevoir les bagages qui est mobile. Ce rangement pourrait également être un coffre à bagages avec un compartiment fixe, fermé par exemple par une porte d'accès.

## Revendications

1. Rangement pour bagages (2), destiné notamment à une cabine d'aéronef, comportant un compartiment présentant une face inférieure (8) et une face supérieure (12), une face ouverte permettant l'accès au compartiment pour le dépôt et le retrait de bagages (22) à l'intérieur de celui-ci et un fond (10), opposé à la face ouverte du compartiment,
**caractérisé en ce que** la face inférieure (8) du compartiment est sensiblement plane du côté de la face ouverte, **en ce que** la face inférieure (8) du compartiment se relève à proximité du fond (10), et **en ce qu'**une rainure (28), dont la concavité est orientée vers la face supérieure (12) du compartiment, est réalisée dans la zone de jonction entre la partie relevée (26) de la face inférieure et le fond (10).

2. Rangement pour bagages (2) selon la revendication 1, **caractérisé en ce que** le bord libre de la face inférieure (8) du compartiment se trouvant du côté de la face ouverte d'accès au compartiment présente un rebord (32) faisant saillie de la face inférieure (8) du compartiment en direction de la face supérieure (12) de celui-ci.

3. Rangement pour bagages (2) selon la revendication 2, **caractérisé en ce que** le rebord (32) est formé par une pièce profilée.

4. Rangement pour bagages (2) selon l'une des revendications 2 ou 3, **caractérisé en ce que** le rebord (32) est arrondi.

5. Rangement pour bagages (2) selon l'une des revendications 1 à 4, **caractérisé en ce que** la partie relevée (26) de la face inférieure (8) du compartiment se relève progressivement de la partie plane (24) jusqu'à la rainure (28).

6. Rangement pour bagages (2) selon l'une des revendications 1 à 5, **caractérisé en ce que** la partie relevée (26) de la face inférieure (8) du compartiment représente entre 15 et 40 % de la face inférieure (8) du compartiment.

7. Rangement pour bagages (2) selon l'une des revendications 1 à 6, **caractérisé en ce que** la rainure (28) se trouve entre 5 et 30 cm au-dessus du niveau de la partie plane (24) de la face inférieure (8) du compartiment.

8. Rangement pour bagages (2) selon l'une des revendications 1 à 7, **caractérisé en ce que** le compartiment est mobile entre une position inférieure ouverte et une position relevée escamotée à l'intérieur d'un plafond (6) de cabine d'aéronef.

9. Rangement pour bagages (2) selon la revendication 8, **caractérisé en ce que** la partie plane (24) de la face inférieure (8) du compartiment, dans la position ouverte du compartiment est sensiblement horizontale, c'est-à-dire sensiblement parallèle au plancher de la cabine d'aéronef.

10. Cabine d'aéronef, **caractérisée en ce qu'**elle comporte au moins un rangement à bagages (2) selon l'une des revendications 1 à 9.

11. Aéronef, **caractérisé en ce qu'**il comporte une cabine selon la revendication 10.

## Claims

1. Storage unit (2) for luggage, Intended in particular for an aircraft cabin, comprising a compartment having a lower face (8) and an upper face (12), an open face allowing access to the compartment for the depositing and removal of luggage (22) inside same and a back (10), opposite the open face of the compartment,
**characterized in that** the lower face (8) of the compartment is substantially planar at the same end as the open face, **in that** the lower face (8) of the compartment rises near the back (10), and **in that** a groove (28), the concavity of which is directed toward the upper face (12) of the compartment, is formed in the joining zone between the raised part (26) of the lower face and the back (10).

2. Storage unit (2) for luggage according to claim 1, **characterized in that** the free edge of the lower face (8) of the compartment situated at the same end as the open face for access to the compartment has a rim (32) projecting from the lower face (8) of the compartment toward the upper face (12) of the latter.

3. Storage unit (2) for luggage according to claim 2, **characterized in that** the rim (32) is formed by a profiled part.

4. Storage (2) unit for luggage according to one of claims 2 or 3, **characterized in that** the rim (32) is rounded.

5. Storage unit (2) for luggage according to one of claims 1 to 4, **characterized in that** the raised part (26) of the lower face (8) of the compartment rises gradually from the planar part (24) to the groove (28).

6. Storage unit (2) for luggage according to one of claims 1 to 5, **characterized in that** the raised part (26) of the lower face (8) of the compartment represents between 15 and 40% of the lower face (8) of the compartment.

7. Storage unit (2) for luggage according to one of claims 1 to 6, **characterized in that** the groove (28) is located between 5 and 30 cm above the level of the planar part (24) of the lower face (8) of the compartment.

8. Storage unit (2) for luggage according to one of claims 1 to 7, **characterized in that** the compartment is movable between a lower position which is open and a raised position which is retracted inside an aircraft cabin ceiling (6).

9. Storage unit (2) for luggage according to claim 8, **characterized in that** the planar part (24) of the lower face (8) of the compartment, in the open position of the compartment, is substantially horizontal, that is, substantially parallel to the floor of the aircraft cabin.

10. Aircraft cabin, **characterized in that** it comprises at least one luggage storage unit (2) according to one of claims 1 to 9.

11. Aircraft, **characterized in that** it comprises a cabin according to claim 10.

## Patentansprüche

1. Gepäckfach (2), das insbesondere für eine Flugzeugkabine bestimmt ist, umfassend ein Abteil, das eine Unterseite (8) und eine Oberseite (12), eine offene Seite, die den Zugang zu dem Abteil für das Einlegen oder die Entnahme von Gepäckstücken (22) in ihrem Inneren (5) gestattet, und einen der offenen Seite des Abteils entgegengesetzten Boden umfasst,
**dadurch gekennzeichnet, dass** die Unterseite (8) des Abteils auf der Seite der offenen Seite im Wesentlichen eben ist, dass die Unterseite (8) des Abteils in Nähe des Bodens (10) ansteigt und dass in der Verbindungszone zwischen dem ansteigenden Teil (26) der Unterseite und dem Boden (10) eine Rille (28) vorgesehen ist, deren Konkavität der Oberseite (12) des Abteils zugewandt ist.

2. Gepäckfach (2) nach Anspruch 1, **dadurch gekennzeichnet, dass** der freie Rand der Unterseite (8) des Abteils, der sich auf der Seite der offenen Seite für den Zugang zum Abteil befindet, einen abgewinkelten Rand (32) aufweist, der von der Unterseite (8) des Abteils in Richtung seiner Oberseite (12) vorsteht.

3. Gepäckfach (2) nach Anspruch 2, **dadurch gekennzeichnet, dass** der abgewinkelte Rand (32) von einem Profilteil gebildet ist.

4. Gepäckfach (2) nach einem der Ansprüche 2 oder 3, **dadurch gekennzeichnet, dass** der abgewinkelte Rand (32) abgerundet ist.

5. Gepäckfach (2) nach einem der Ansprüche 1 bis 4, **dadurch gekennzeichnet, dass** der ansteigende Teil (26) der Unterseite (8) des Abteils vom ebenen Teil (24) bis zu der Rille (28) allmählich ansteigt.

6. Gepäckfach (2) nach einem der Ansprüche 1 bis 5, **dadurch gekennzeichnet, dass** der ansteigende Teil (26) der Unterseite (8) des Abteils zwischen 15 und 40 % der Unterseite (8) des Abteils darstellt.

7. Gepäckfach (2) nach einem der Ansprüche 1 bis 6, **dadurch gekennzeichnet, dass** die Rille (28) sich zwischen 5 und 30 cm über dem Niveau des ebenen Teils (24) der Unterseite (8) des Abteils befindet.

8. Gepäckfach (2) nach einem der Ansprüche 1 bis 7, **dadurch gekennzeichnet, dass** das Abteil zwischen einer offenen unteren Stellung und einer hochgeklappten, in das Innere einer Decke (6) der Flugzeugkabine versenkten Stellung beweglich ist.

9. Gepäckfach (2) nach Anspruch 8, **dadurch gekennzeichnet, dass** der ebene Teil (24) der Unterseite (8) des Abteils in der offenen Stellung des Abteils im Wesentlichen horizontal ist, das heißt im Wesentlichen parallel zum Boden der Flugzeugkabine.

10. Flugzeugkabine, **dadurch gekennzeichnet, dass** sie mindestens ein Gepäckfach (2) nach einem der Ansprüche 1 bis 9 umfasst.

11. Flugzeug, **dadurch gekennzeichnet, dass** es eine Kabine nach Anspruch 10 umfasst.
